# EUROPEAN PATENT SPECIFICATION

(11) **EP 1 060 374 B1**
(45) Date of publication and mention of the grant of the patent: **15.06.2011**
(21) Application number: 98964670.8
(22) Date of filing: 22.12.1998
(51) Int. Cl.: G01L 9/12

(54) **A PRESSURE SENSOR FOR DETECTING SMALL PRESSURE DIFFERENCES AND LOW PRESSURES**
DRUCKSENSOR ZUR ERFASSUNG VON KLEINEN DRUCKDIFFERENZEN UND NIEDRIGEN DRUCKWERTEN
CAPTEUR DE PRESSION POUR DETECTER DE FAIBLES DIFFERENCES DE PRESSION ET DE BASSES PRESSIONS

(30) Priority: 22.12.1997 SE 9704840
(43) Date of publication of application: 20.12.2000
(73) Proprietor: MKS Instruments, Inc., Andover, MA 01810 (US)
(72) Inventor: JONSSON, Staffan, S-691 33 Karlskoga (SE)
(74) Representative: Larfeldt, Helene
(86) International application number: PCT/SE1998/002441
(87) International publication number: WO 1999/032866

(56) References cited:
- EP-A2- 0 490 807
- GB-A- 2 204 413
- US-A- 4 425 799
- US-A- 4 587 851
- US-A- 4 769 738
- US-A- 5 485 345
- US-A- 5 499 158

## Description

### TECHNICAL FIELD

The present invention relates to a method of manufacturing a ceramic, capacitive pressure transducer or sensor element for detecting small pressure differences and low pressures.

### BACKGROUND

Sensor elements to be used in pressure sensors can be designed to detect strain or capacitance, i.e. be the strain type or the capacitive type. They can be built from various ceramic materials. Ceramic materials based on aluminium oxide are often used in such sensor elements but also glass ceramic materials can be used. A ceramic capacitive sensor element for sensing pressures is usually constructed of two main parts. These parts comprise a stabile base plate and a thinner circular plate, also called a diaphragm, a part of which is movable with a pressure difference and which mounted to one of the large surface of the base plate and joined thereto by for example glass joints at the circular edge of the thin plate and the base plate. The diaphragm has the same diameter as the base plate and has a thickness which is adapted to the magnitude of the load, i.e. the pressure difference to which the diaphragm is intended to be subjected.

The change of the position of the central portion of the diaphragm is detected as a change of a capacitance between two oppositely located electrodes made of e.g. gold, the electrodes being layers which are coated by means of thin film methods on facing surfaces of the base plate and the diaphragm respectively. Such a sensor element can be used for different types of pressure measurements, where the desired variable is a measurement pressure acting on the free surface of the diaphragm, i.e. on the surface which does not face the base plate. The measurement is always made in relation to some form of a reference pressure acting on the inner surface of the diaphragm which faces the base plate and is opposite the free surface. Pressure sensors can be classified based on the way in which the reference pressure is formed. Thus the pressure sensor is:

| | |
|---|---|
| a "gauge sensor" | if the reference pressure = the atmospheric pressure |
| an "absolute sensor" | if the reference pressure = a technical zero pressure |
| a "differential sensor" | if the reference pressure = a second measurement pressure |

The diaphragm of such a sensor element is the part which mainly determines the performance of the sensor element. The diaphragm should be as thin as possible in order to provide a high sensitivity. However, a too thin diaphragm can easily break if exposed to too high pressures. Apparently a sensor element intended for measuring extremely small pressures should comprise such a very thin diaphragm but such a diaphragm cannot without taking some precautions be subjected to the atmospheric pressure. However, thin plates, which have been produced by mechanical working such as polishing, always have mechanical stresses and are not completely flat in an unloaded state, at least not for varying ambient temperatures and are thus not suitable to be used in high reliability pressure sensors which are intended for small pressures.

In U.S. patent 4,425,799 a pressure transducer for measuring pressure differences between two fluids is disclosed. A diaphragm plate is placed very close to a relatively thick plate, the plates being made from ceramic materials or glass. The thickness of the diaphragm plate varies between 0.80 and 1.60 of its diameter. In U.S. patent 5,499,158 a pressure transducer is disclosed having two closed cavities to form a measuring capacitor and a reference capacitor. In U.S. patent 4,769,738 a pressure sensor is disclosed having two measuring chambers bounded by two diaphragms on the opposite sides of an insulating substrate. A base plate is attached to one of the diaphragms and another base plate can be attached to the other diaphragm. A differential pressure transducer is disclosed in U.S. patent 5,485,345 and has cavities that are located on opposite sides of a stationary, relatively thick central plate and are bounded by flexible diaphragms.

### SUMMARY OF THE INVENTION

It is an object of the invention to provide a method of manufacturing sensor elements which have an extremely high sensitivity and stability and which can stand large pressure variations.

Such a method is defined in the appended claims

A sensor element of the capacitive type constructed of mainly ceramic materials comprises a circular ceramic plate, also called a diaphragm, which is movable with the pressure of the gas acting on it and which is extremely thin and has typically a thickness less than 0.1 mm for a diameter of 38 mm of the plate, i.e. it has a ratio of the thickness to the diameter which is less than substantially 0.26 %. The ratio of the thickness to the diameter of the movable portion of the diaphragm will then be less than about 0.35 %. As to its other characteristics the sensor element can be made according to the disclosure of the published International patent application WO98/37392. The extremely thin ceramic diaphragm is furthermore attached between two ceramic elements in a particular manner. Such a mounting allows that the sensor element can be made to have an insignificant temperature drift.

The ceramic material used in the sensor element and in particular in the thin diaphragm is preferably aluminium oxide. Other ceramic materials such as glass ceramic materials can also be used but have not equally good properties.

In a method of manufacturing such flat, extremely thin diaphragms and of mounting them in sensor elements diaphragms can be obtained which have a low helium permeability, which have no viscoelastic properties and which have no mechanic indications of fracture such as micro cracks or similar material defects which can influence the strength of such diaphragms when they are subjected to pressure variations.

Between a base plate and a shielding plate preferably an electrically conductive layer of gold, applied by means of thin film methods, is located according to the disclosure of the published International patent application WO95/2862 in order to change and minimize stray capacitances around the measurement electrodes. Furthermore, on the under surface of the base plate and on the top surface of the shielding plate electrically conductive gold layers can be provided, which have a circular shape and are located opposite or facing each other and thereby form a pair in a reference capacitor.

The shielding layer can be enclosed by a dotted or channelled glass pattern according to the disclosures of the published International patent application WO95/28623 and the published International patent application WO98/37393. Furthermore, the reference capacitor can be surrounded by a similar dotted or channelled glass pattern.

A metallic mounting element can be attached to the sensor element according to the disclosure of the published International patent application WO95/28623 cited above.

The shielding plate can be a circular ceramic plate which has the same thickness as the thin circular ceramic plate which is movable with the pressure acting on its free surface. Such a thin ceramic shielding plate can further have a small recess, which has by means of laser been cut out of the peripheral edge of the shielding plate. The recess results in that the spaces between the measurement diaphragm and the shielding plate and between the shielding plate and the base plate can be given the same reference pressure.

In sensor elements intended for measurement of absolute pressures an ultra high vacuum reference pressure is provided which is integrated in the reference cavity of the sensor element according to the disclosure of the published International patent application WO98/37392 cited above. An NEG-element (Non Evaporable Getter element) which is active at ambient temperatures maintains the reference pressure at an ultra high vacuum level for long periods of time comprising several years.

A sensor element according to the discussion above is built of three or four circular ceramic plates which in sequence or stacking order comprise:
Case A: a base plate, a diaphragm, a front plate or front ring
Case B: a base plate, a shielding plate, a diaphragm, a front plate or front ring

Sensor elements according to Case A are the absolute type intended for measuring absolute pressures. Sensor elements according to Case B comprise both elements intended for measuring absolute pressure and so called gauge-elements according to the definition above, in which the pressure of the atmosphere constitutes a reference in relation to a pressure of a measurement medium which is to measured.

Such capacitive sensor elements comprising extremely thin diaphragms are advantageously used when measuring small pressure differences for flow determination and controlling for example air in ventilation systems and in absolute measurements of low vacuum pressures in for example the manufacture of semiconductors.

A sensor element fabricated according to the principles as indicated above will have insignificant and negligible errors as to non-linearity, repeatability and hysteresis and an insignificant temperature drift of the zero point and in the measurement range of the sensor element.

### BRIEF DESCRIPTION OF THE DRAWINGS

The invention will now be described as a non-limiting embodiment with reference to the accompanying drawings, in which.
- Fig. 1 is a sectional view of a sensor element having a NEG-element and an extremely thin diaphragm,
- Fig. 2a is a sectional view of an aluminium oxide film coated on top of a thin polymer film,
- Fig. 2b is a sectional view of a sintered circular thin aluminium oxide plate,
- Fig. 2c is a sectional view of a sintered circular thin aluminium oxide film located between two aluminium oxide blocks during a second sintering cycle,
- Fig. 2d is a sectional view of a turned-around, twice sintered thin aluminium film located between two aluminium oxide blocks during a third sintering cycle,
- Fig. 3 is a sectional view of jig comprising two aluminium oxide blocks, between which a green film is placed and which are coated with a suitable material in order to avoid adhesion during the sintering cycle, the jig being constructed so that the pressing force between the blocks can be varied when running a sintering process,
- Fig. 4 is a sectional view of a sensor element comprising an integrated reference electrode and an extremely thin circular ceramic plate which is movable with a pressure, in which sensor element the atmospheric pressure is used as a reference, and
- Fig. 5 is a sectional view of a sensor element comprising an integrated reference electrode and an extremely thin, circular ceramic plate which is movable with a pressure, in which sensor element an integrated technical zero pressure is used as a reference pressure.

### DETAILED DESCRIPTION

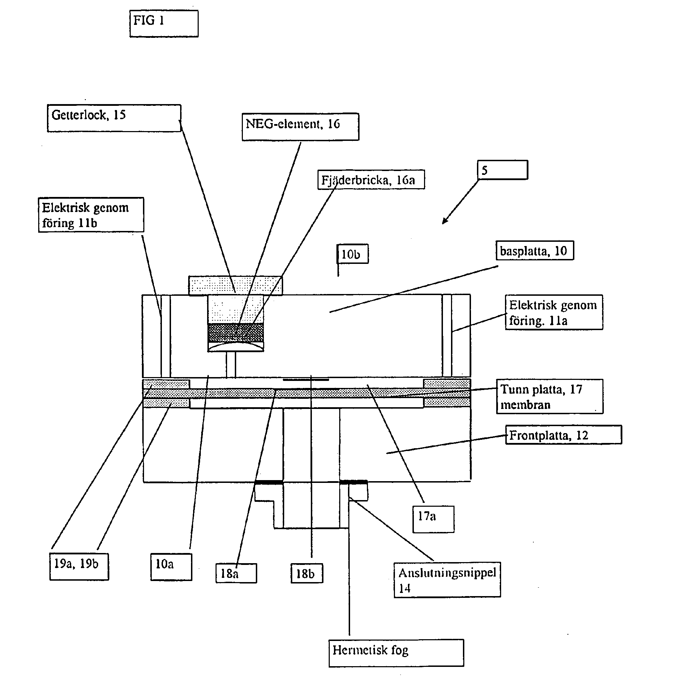

Sensor elements of the absolute type, i.e. for measuring absolute pressures, according to Case A as defined above consist of three ceramic circular plates. In Fig. 1 such a sensor element 5 is shown which is built of a base plate 10, a front plate 12 and a circular ceramic plate 17, also called a diaphragm, which is movable with the difference of the gas pressures acting on the its large surfaces. The diaphragm is extremely thin in relation to its diameter and is located between the base plate and the front plate. In the base plate 10 two circular through-holes 11a and 11b are provided for letting electrical conductors through. On the under side 10a of the base plate 10 an electrically conducting thin film 18b of preferably gold is provided, which is made by means of thin film methods, the free, under surface of this thin film 18b constituting one of two opposite electrically conductive areas which form the measurement capacitor of the sensor element. On the top surface 17a of the diaphragm 17 a second electrode area is constituted by a layer applied to this surface, which thus is opposite or facing the under surface of the thin film 18b. The thin electrically conductive layer 18a on the top side of the diaphragm is preferably made of gold and is made by means of thin film methods. The layer 18a, which forms the electrode area on the diaphragm 17, has a somewhat larger diameter than the thin film layer 18b constituting the upper electrode area on the under side of the base plate 10.

A glass joint 19a between the under side 10a of the base plate 10 and the top side 17a of the diaphragm 17 and a glass joint 19b located between the under side of the diaphragm and the top side of the front plate 12, which is located undermost of the plates, hold the plates to form one single unit.

In the center of the front plate 12 a connection nipple 14 of metal is attached. The connection nipple 14 is attached to the front plate made of a ceramic material according to the disclosure of the cited published International patent application WO/28623. The connection nipple 14 is made of a special metal alloy. A preferred material is "Vacon 70".

The top side 10b of the base plate 10 has a recess in which an NEG-element 16 is arranged, which rests on a conical spring washer 16a made of an inert material. The NEG-material is enclosed in the reference cavity by a getter lid 15. This construction is disclosed in the cited published International patent application WO98/37392. The base plate 10 and the front plate 12 has advantageously substantially the same thickness.

In the sensor element 5 the ceramic plate 17 which is movable with the pressure is a unique part which has previously been beyond the technical possibility of being produced in order to be used in applications such as measuring small difference pressures in ventilation systems or small absolute pressures in vacuum systems. The ceramic plate 17 is produced of pure crystalline aluminium oxide having very small additives of materials such as e.g. MgO. It has a great importance that the plate 17 does not have viscoelastic properties caused by a possible amorphous phase in the material.

The plate 17 is manufactured of an aluminium oxide powder having a selected grain size of for example an average diameter of 2 µm. It is very important in order for the plate to operate in vacuum applications that the material of the plate has a suitable grain size and thereby a low helium permeability.

Furthermore, it has a great importance, that the plate is plane-parallel, i.e. has completely flat, parallel large surfaces, and has no distortions or other geometric errors. Absolutely correct geometric dimensions are further necessary if the plate is to have no temperature drift, when it in operation is located between a base plate 10 and a front plate 12, which both have substantially the same thickness. The plate 17 has a thickness which does not allow mechanical working of type polishing in order to achieve the intended very small thickness. Furthermore, polishing causes distortions and induces stresses in the plate which when using the sensor element result in fractures.

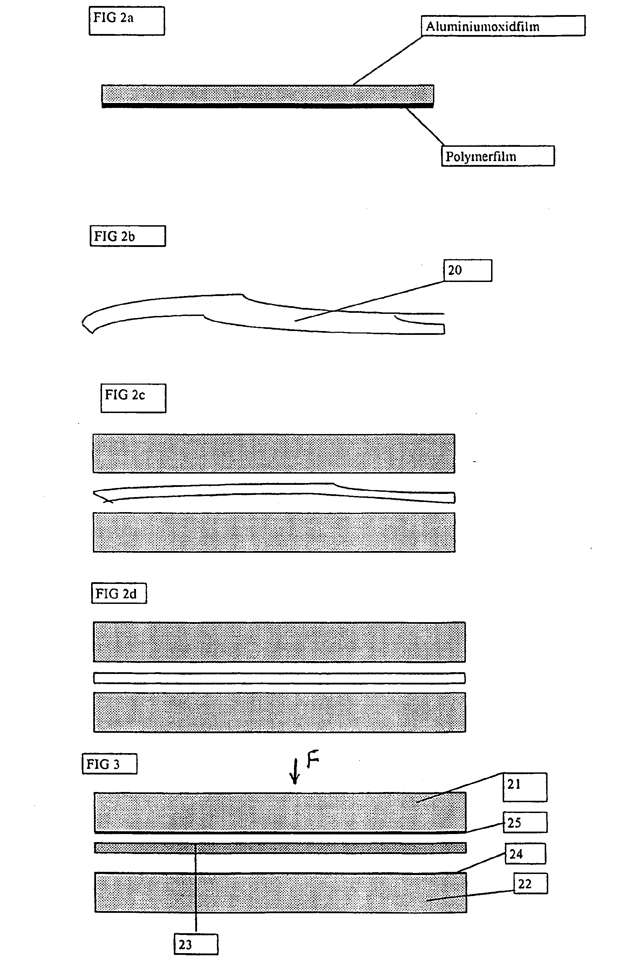

In order to produce a plane-parallel plate aluminium oxide powder having a suitable grain size is mixed with a binding agent and a dispersion agent of water soluble types and some water to form a slurry. The aluminium oxide slurry, see Fig. 2a, is coated on top of a thin polymer film by means of a "tape-casting" method to form a film. The obtained film of aluminium oxide is dried to form a green film which can stand to be handled and which is released from the polymer film. From the green film plates 17 having a suitable diameter cut, such as by means of laser light or by shearing operations, e.g. ordinary cutting or punching. The diameter of the plates 17 is selected considering shrinking during the following sintering steps, so that for obtaining a finished diaphragm having a diameter of 38 mm the plates 17 must have a larger diameter of e.g. 41 - 44 mm. Thus generally, these plates have been obtained from an aluminium oxide slurry arranged on top of a thin substrate such as a polymer film.

In a heating procedure the green film is sintered in an oven at 1600°C. This sintering is made applying no pressure to the green film. Then the sintered plate 20 obtained after the heating procedure will be deformed, i.e. have changes of its shape, see Fig. 2b. To achieve a completely plane-parallel plate the plate 20 is then sintered a second time between two blocks of polished aluminium oxide having dimensions of for example 50·50·5 mm for a diameter of 38 mm of the finished plate, as exemplified above, see Fig. 2c. The blocks press the deformed plate 20 to a flat condition owing to the weight of the upper block. The plate 20 is then turned around, so that its previously lower surface now is the top surface, and is sintered in this condition between the aluminium oxide blocks a third time, see Fig. 2d. After the third sintering process the ceramic plate 20 is completely plane-parallel and no mechanical working of type polishing has been used in any step of the procedure. Plates having a thickness smaller than 0.1 mm can be obtained using this method.

In Fig. 3 a jig is schematically illustrated, in which the pressing force F from the two blocks 21 and 22 is variable. Then a very small force is applied at the start of the heating procedure, which force is then increased to a value corresponding for example to the weight of a block 21, 22 as described above. The green film 23 is during the pressing and heating operation placed between bodies such as the blocks 21, 22, which at their pressing surfaces have a thin film coating 24 and 25 of a special material, which is selected, so that the material of the plate, which is to be sintered, cannot adhere to the pressing surfaces during the sintering process. When using a jig as described above the sintering process can be made in one single heating step.

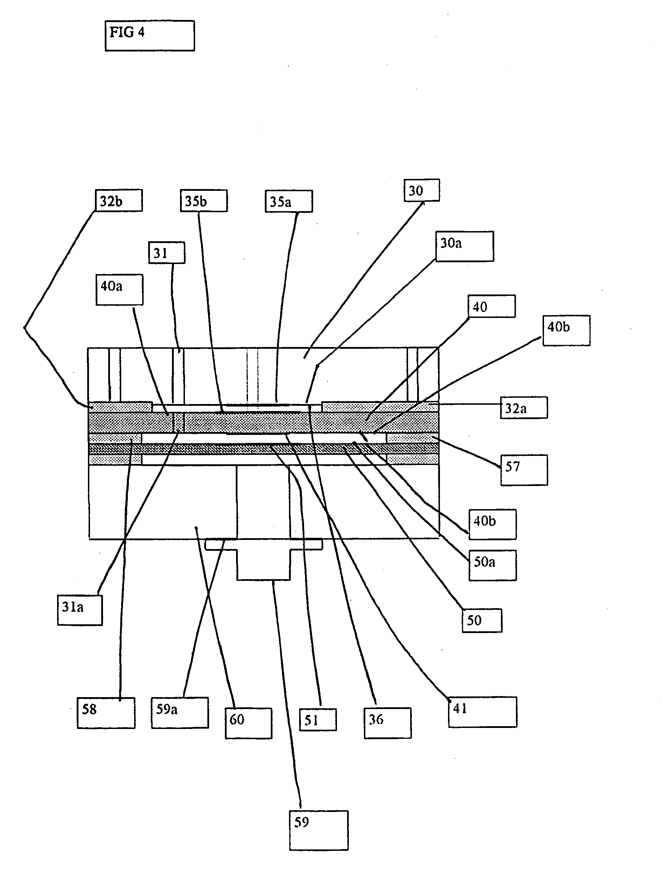

In Fig. 4 a cross-sectional view of a sensor element according to Case B as defined above is shown, which element is intended to be used for measurements using the atmospheric pressure, as a reference, in which similar or identical components have been produced substantially as described above. The sensor element is constructed of a base plate 30, a shielding plate 40, a thin diaphragm 50 and a front plate 60. On the under side 30a of the base plate 30 an electrically conducting, thin film area 35a of preferably gold is disposed, which as above is produced by means of thin film methods. Opposite this area, located on the top side 40a of the shielding plate 40, is an electrically conducting thin film area 35b of preferably gold is arranged which is also made by means of thin film methods. The electrically conducting, facing areas form a reference capacitor.

The atmospheric pressure reaches the cavity around the reference capacitor through a channel 31. The cavity is enclosed by a glass joint 32a and 32b, which has been applied as a dotted or channelled pattern according to the disclosure of the cited published International patent application WO95/28623. The cavity around the reference electrode pair 35a and 35b consists of an interspace or gap 36 having a thickness of 20 - 50 µm. The thickness of the interspace 36 is determined by glass joints 32a and 32b. A preferred gap thickness is 20 µm. If the space between the base plate 30 and the shielding plate 40 is used also for integrating thermistor elements according to what is described in the cited International patent application WO 98/37393, the interspace 36 can instead have a thickness of 50 µm.

Further, on the under side 40b of the shielding plate 40 an electrically conducting thin film area 41 of preferably gold is applied. On the top side 50a of the thin plate 50 an electrically conducting thin film area 51 of preferably gold is also applied. These opposite or facing areas 41 and 51 form an electrode pair which constitutes the measurement capacitor of the sensor element. The atmospheric pressure reaches the cavity between the under surface 40b of the shielding plate 40 and the top side 50a of the thin plate 50 through a prolongation of the channel 31 in the base plate 30 which is formed by a - channel 31a in the shielding plate 40.

In this preferred embodiment of a gauge-element, in which the atmospheric pressure is the reference pressure, the reference electrode pair 35a, 35b and the measurement electrode pair 41, 51 will be exposed to the humidity of air. Using suitably designed electronic circuits for determining suitable electric quantities of the reference electrode pair and the measurement electrode pair it can be obtained, that the influence of the air humidity on the capacitance between measurement electrode and reference electrode cancel each other. When using the element, the measured values will have no dependency on the humidity of air.

In a preferred embodiment the capacitance of the reference capacitor will not change when the plate 50 which is movable with the pressure changes the electric characteristic value given by the measurement capacitor. A reference capacitor having a capacitance changing with the pressure results in linearity errors so that the measured values do not agree with the theoretical relations described in the cited published International patent application WO95/28624.

A preferred distance between the measurement electrode areas 41 and 51 are as above 20 µm. The distance is defined by glass joints 57 and 58. In the front plate 60, which has a thickness corresponding substantially to the sum of the thicknesses of the base plate 30 and the shielding plate 40, a connection nipple 59 of a metallic material is attached. In a preferred embodiment the nipple is made of "Vacon 70" as described above. The joint 59a between the connection nipple 59 and the front plate 60 of aluminium oxide gives a hermetic and stabile mounting of the nipple.

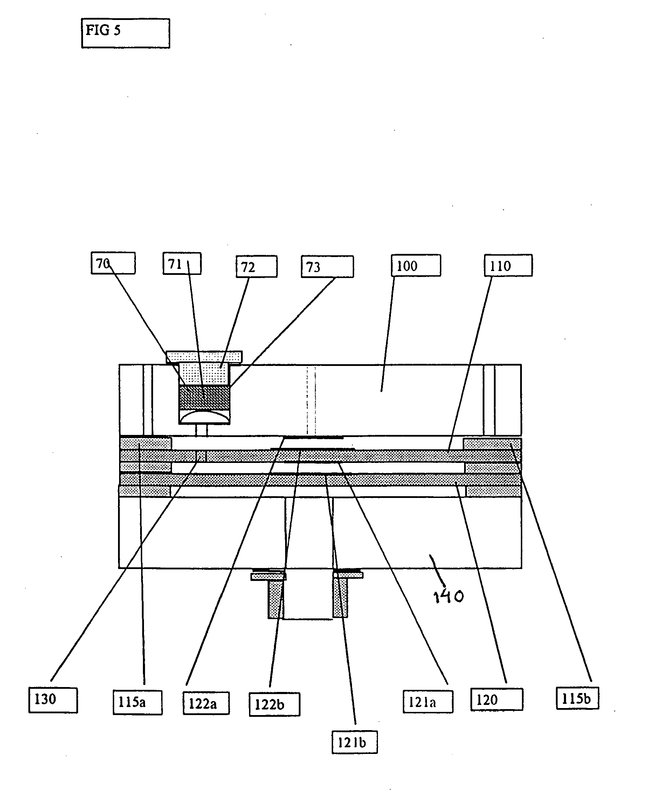

In Fig. 5 a sensor of the same type as in Fig. 4 is illustrated in which the channel 31 is replaced by an NEG-element 70, a spring washer 71, a getter lid 72 and a recess 73 in the base plate 100, compare also the sensor element of Fig. 1. The element thus belongs to Case B as defined above comprising an absolute reference pressure. The shielding plate can be designed to have a thickness of 0.5 mm. In a preferred embodiment the shielding plate is substantially thinner than in the embodiment according to Fig. 4 and can have substantially the same thickness as the plate 120 which is movable with the pressure.

The glass joints 115a and 115b between the base plate 100 and the shielding plate 110 are in a preferred embodiment part of a circular ring and the channel 130 is a hole cut by means of laser light in the shielding plate 110. When using a ceramic plate 120 which is movable with the pressure and has a thickness of the magnitude of order of 50 µm or less the influence of gravitation on such a plate will cause that the angular position of the sensor element, i.e. whether it is placed in a vertical or horizontal direction, will affect the capacitive value of the measurement capacitor formed by the electrodes 121a, 121b. The own weight of the thin plate 120 results, for a rotation of the sensor element from a horizontal position to a vertical position and for an inverse movement, in a change of the capacitive value of the measurement electrodes.

The reference electrode pair 122a, 122b will, in the case where the shielding plate 110 has substantially the same thickness as the thin plate 120, cause a corresponding change of the capacitive value of the reference electrode which change has an equal magnitude. For suitably designed electronic circuits for detecting the capacitances of the measurement electrode pair and the reference electrode pair this influence of the gravitation can be compensated and thereby also the geometric orientation of the sensor element.

## Claims

1. A method of manufacturing a plane-parallel diaphragm plate (17; 50; 120) for a pressure sensor, the diaphragm plate intended to move dependent on variations of a pressure and having a thickness smaller than 0.35 % of the diameter of the portion of the diaphragm plate, which moves for variations of the pressure, **characterized in that** for producing the diaphragm plate a layer of a slurry containing grains of a ceramic material is applied to a substrate, whereupon the layer is dried and then is released from the substrate and is subjected to a heating procedure at a temperature adapted to sinter the grains of the ceramic material.

2. A method according to claim 1, **characterized in that** the layer during the heating procedure is subjected to increasing pressing forces starting with zero pressing forces.

3. A method according to any of claims 1 - 2, **characterized in that** the layer during a first part of the heating procedure is freely arranged on a base and during a second part of the heating procedure, following the first part, is subjected to pressing forces.

4. A method according to claim 3, **characterized in that** the pressing forces during the second part of the heating procedure are obtained from the weight of a block freely arranged on top of the layer.

5. A method according to claim 3, **characterized in that** the pressing forces during a first period of the second part of the heating procedure are obtained from the weight of a block freely arranged on top of a first surface of the layer, which rests on a base, and that the layer is then turned around, so that the pressing forces during a second period of the second part of the heating procedure are obtained by letting the weight of a block act on a second surface of the layer, which second surface is opposite the first surface.

6. A method according to any of claims 1 - 5, **characterized in that** the ceramic material used comprises aluminium oxide.

## Patentansprüche

1. Verfahren zur Herstellung einer planparallelen Membranplatte (17; 50; 120) für einen Drucksensor, wobei sich die Membranplatte in Abhängigkeit von Druckschwankungen bewegen soll und eine Dicke von weniger als 0,35 % des Durchmessers des Abschnitts der Membranplatte aufweist, der sich bei Druckschwankungen bewegt, **dadurch gekennzeichnet, dass** zur Herstellung der Membranplatte eine Schicht einer Schlämme, welche Körner eines Keramikmaterials enthält, auf ein Substrat aufgebracht wird, wonach die Schicht getrocknet wird und anschließen von dem Substrat gelöst wird und einem Heizvorgang bei einer Temperatur unterzogen wird, die dafür geeignet ist, die Körner des Keramikmaterials zu sintern.

2. Verfahren nach Anspruch 1, **dadurch gekennzeichnet, dass** die Schicht während des Heizvorgangs steigenden Presskräften ausgesetzt wird, beginnend mit der Presskraft Null.

3. Verfahren nach einem der Ansprüche 1 bis 2, **dadurch gekennzeichnet, dass** die Schicht während eines ersten Teils des Heizvorgangs frei auf einer Basis angeordnet ist und während eines zweiten Teils des Heizvorgangs, welcher dem ersten Teil folgt, Presskräften ausgesetzt wird.

4. Verfahren nach Anspruch 3, **dadurch gekennzeichnet, dass** die Presskräfte während des zweiten Teils des Heizvorgangs durch das Gewicht eines Blocks erhalten werden, der oben auf der Schicht frei angeordnet wird.

5. Verfahren nach Anspruch 3, **dadurch gekennzeichnet, dass** die Presskräfte während einer ersten Periode des zweiten Teils des Heizvorgangs durch das Gewicht eines Blocks erhalten werden, der oben auf einer ersten Fläche der Schicht frei angeordnet wird, welche auf einer Basis gelagert ist, und dass die Schicht dann umgedreht wird, derart, dass die Presskräfte während einer zweiten Periode des zweiten Teils des Heizvorgangs **dadurch** erhalten werden, dass das Gewicht eines Blocks auf eine zweite Fläche der Schicht wirken kann, wobei die zweite Fläche gegenüber der ersten Fläche angeordnet ist.

6. Verfahren nach einem der Ansprüche 1 bis 5, **dadurch gekennzeichnet, dass** das verwendete Keramikmaterial Aluminiumoxid umfasst.

## Revendications

1. Procédé de fabrication d'un plateau de membrane plan parallèle (17 ; 50 ; 120) pour un capteur de pression, lequel plateau de membrane est destiné à se déplacer en fonction des variations d'une pression et possède une épaisseur inférieure à 0,35 % du diamètre de la partie du plateau de membrane qui se déplace sous l'effet des variations de la pression, **caractérisé en ce que**, pour produire le plateau de membrane, on dépose une couche d'une barbotine contenant des grains d'un matériau céramique sur un substrat puis on sèche la couche et ensuite on la détache du substrat et on la soumet à un traitement thermique à une température adaptée pour fritter les grains du matériau céramique.

2. Procédé selon la revendication 1, **caractérisé en ce que** la couche est soumise pendant le traitement thermique à des forces de compression croissantes à partir d'une force de compression nulle.

3. Procédé selon l'une quelconque des revendications 1 et 2, **caractérisé en ce que** la couche est librement disposée sur une base pendant une première partie du traitement thermique et soumise à des forces de compression pendant une deuxième partie du traitement thermique consécutive à la première partie.

4. Procédé selon la revendication 3, **caractérisé en ce que** les forces de compression pendant la deuxième partie du traitement thermique sont générées par le poids d'un bloc librement disposé sur le dessus de la couche.

5. Procédé selon la revendication 3, **caractérisé en ce que** les forces de compression pendant une première période de la deuxième partie du traitement thermique sont générées par le poids d'un bloc librement disposé sur le dessus d'une première surface de la couche qui repose sur une base et **en ce que** la couche est ensuite retournée de telle façon que les forces de compression pendant une deuxième période de la deuxième partie du traitement thermique sont générées en laissant le poids d'un bloc agir sur une deuxième surface de la couche, laquelle deuxième surface se trouve à l'opposé de la première surface.

6. Procédé selon l'une quelconque des revendications 1 à 5, **caractérisé en ce que** le matériau céramique utilisé comprend de l'oxyde d'aluminium.
